# EUROPEAN PATENT SPECIFICATION

(11) **EP 2 916 561 B1**
(45) Date of publication and mention of the grant of the patent: **22.06.2016**
(21) Application number: 14305314.8
(22) Date of filing: 05.03.2014
(51) Int. Cl.: H04Q 3/68, H04J 3/16

(54) **Crossbar for a WDM network**
Querträger für ein WDM-Netzwerk
Commutateur crossbar pour un réseau WDM

(43) Date of publication of application: 09.09.2015
(73) Proprietor: ALCATEL LUCENT, 92100 Boulogne-Billancourt (FR)
(72) Inventor: Lewis, Stephen, Murray Hill, NJ 07974-0636 (US); Razzetti, Luca Gabriele, 20871 Vimercate (MB) (IT); Rinaldi, Sonia, 20871 Vimercate (MB) (IT); Sorge, Paolo, 20871 Vimercate (MB) (IT)
(74) Representative: Wetzel, Emmanuelle

(56) References cited:
- EP-A1- 2 037 604
- US-B2- 7 602 776

## Description

### Technical field

The present invention generally relates to the field of optical networks. In particular, the present invention relates to a crossbar for a WDM network.

### Background art

As it is known, a crossbar is a device provided with a number N of input ports, a number N of output ports and a non-blocking NxN interconnection capability, meaning that the crossbar is capable of switching a client signal incoming through anyone of the N input ports towards anyone of the N output ports. Crossbars are typically transparent devices, namely their operation is independent of the format of the incoming client signal, the switching operation being carried out without performing any processing or transformation on the client signal content.

Crossbars are one of the main building blocks of network apparatuses for WDM (Wavelength Division Multiplexing) networks, where they are capable of transparently switching input flows independently of their bitrate, provided the bitrate lies within a certain predefined range. Crossbars in WDM networks are typically used to implement protection mechanisms and also to connect components hosted on separate boards within a same shelf, in very flexible way and independently of the signal format supported by such components.

Typically, a digital crossbar for WDM network is implemented on a single chip.

Hence, the maximum number N of input ports and output ports of a crossbar is currently bound to the maximum number of signal pins which may be provided on a same chip, which is typically few hundreds. For instance, a single-chip crossbar typically has N=128 input ports and N=128 output ports. If the capacity of each port is 10 Gb/s, the maximum capacity of the crossbar is 10 Gb/s * 128 = 1.28 Tb/s.

If a higher capacity is required, it is known providing a multi-chip crossbar (also known as "distributed crossbar") wherein the interconnection capability is partitioned between multiple single-chip crossbars reciprocally connected. In particular, the single-chip crossbars are reciprocally connected according to a non-blocking configuration, e.g. the non-blocking configuration described by C. Clos (March 1953): "A study of non-blocking switching networks", Bell System Technical Journal 32 (2), pages 406-424.

### Summary of the invention

In order to preserve the non-blocking interconnection capability of a multi-chip crossbar of the type described above, the number of single-chip crossbars to be included in such device scales quadratically with the capacity. In other words, if a single-chip crossbar has a certain capacity and one wishes to double it, 4 single-chip crossbars reciprocally connected are needed. Similarly, if one wishes to quadruplicate the capacity, 16 single-chip crossbars reciprocally connected are needed. And so on. Hence, the complexity of a multi-chip crossbar disadvantageously increases quadratically with the crossbar capacity. A more than linear (and less than quadratic) increase may be provided, but this may be achieved only by increasing the complexity of the connection scheme.

Moreover, the multi-chip crossbar of the type described above disadvantageously may not be scaled in a hitless manner. In other words, if one wishes to increase the overall capacity, one or more single-chip crossbars shall be added to the device, which requires temporarily suspending the operation of the multi-chip crossbar.

In view of the above, the inventors have tackled the problem of providing a crossbar (in particular, a crossbar for WDM networks) which overcomes the aforesaid drawbacks, namely whose complexity increases less than quadratically with the capacity of the crossbar, and whose capacity may be arbitrarily varied during operation, in a hitless manner.

According to the present invention, the above problem is solved by a crossbar comprising TDM switches with slicers at their inputs and deslicers at their outputs. The crossbar comprises mappers receiving respective client signals and mapping them into TDM input flows, which are fed to the slicers. The slicers slice each TDM input flow in different TDM input sub-flows on a per-tributary basis. The TDM switches switch the content of the TDM input sub-flows into a number of TDM output sub-flows, which are recombined by the deslicers thereby recovering TDM output flows carrying the original content of the TDM input flows. The crossbar also comprises demappers extracting the client signals from the TDM output flows. While the interconnectivity function is implemented by TDM switches, mappers and demappers allow the crossbar operating with any signal format in a transparent way. Implementing the interconnectivity function by TDM switches is advantageous in terms of scalability of the crossbar capacity.

According to a first aspect, the present invention provides a crossbar for a communication network, the crossbar comprising:
- a mapper configured to receive a client signal and to map the client signal into at least one tributary of a TDM input flow;
- a slicer configured to slice the TDM input flow into K TDM input subflows on a per-tributary basis, thereby slicing the input tributary into K input sub-tributaries of the K TDM input sub-flows, K being an integer number equal to or higher than 2;
- K TDM switches, each TDM switch being configured to receive a respective TDM input sub-flow and to switch the input sub-tributary of the received TDM input sub-flow into an output sub-tributary of a TDM output sub-flow, the K TDM switches thereby providing K TDM output sub-flows comprising K output sub-tributaries carrying the client signal;
- a deslicer configured to merge the K TDM output sub-flows in a TDM output flow on a per-tributary basis, by merging the K output sub-tributaries into an output tributary of the TDM output flow; and
- a demapper configured to extract the client signal (C1) from the output tributary (4T) of the TDM output flow (So4).

Preferably, the mapper is configured to map the client signal into one or more input tributaries of the TDM input flow, the number of input tributaries of the TDM input flow in which the client signal is mapped depending on the bitrate of the client signal and the bitrate of the input tributaries of the TDM input flow.

Preferably, the mapper is configured to map the client signal into:
- a single input tributary of the TDM input flow, if the bitrate of the client signal is lower than the bitrate of the input tributaries of the TDM input flow; or
- multiple input tributaries of the TDM input flow, if the bitrate of the client signal is higher than the bitrate of the input tributaries of the TDM input flow.

Preferably, the mapper is configured to adapt the bitrate of the client signal to the bitrate of the input tributaries of the TDM input flow using a bit stuffing technique.

According to a preferred variant, the bitrate of the input tributaries of the TDM input flow is selected higher than the minimum bitrate amongst bitrates of the client signals input at the crossbar and lower than the bitrates of the client signals excluded the minimum bitrate.

Preferably, each one of the K TDM switches has N input ports and N output ports, N being an integer number equal to or higher than 2, and:
- the crossbar comprises M slicers, M being an integer number equal to or higher than 1 and equal to or lower than N, each one of the M slicers having an input and K outputs, the input of each slicer being suitable for receiving a respective TDM input flow and the k^{th} output of each slicer being connected to one of the N input ports of the k^{th} TDM switch, k being an integer index ranging from 1 to K; and
- the crossbar comprises M deslicers, each one of the M deslicers having a single output and K inputs, the output of each deslicer being suitable for providing a respective TDM output flow and the k^{th} input of each deslicer being connected to one of the N output ports of the k^{th} TDM switch, k being an integer index ranging from 1 to K.

Preferably, the TDM input flows provided at the inputs of the M slicers are generated on a same time basis and are reciprocally synchronized.

Preferably, the crossbar comprises, for each one of the M slicers, at least one mapper configured to map a respective client signal into at least one input tributary of the TDM input flow received at the input of the slicer.

Preferably, each one of the M slicers is configured to slice the TDM input flow received at its input into K TDM input sub-flows on a per-tributary basis, and to forward the k^{th} TDM input sub-flow to the k^{th} TDM switch, k being an integer index ranging from 1 to K.

Preferably, each one of the K TDM switches is configured to receive M TDM input sub-flows, namely one TDM input sub-flow from each one of the M slicers, to carry out a non-blocking interconnectivity function between the M TDM input sub-flows and M TDM output sub-flows, and to forward each one of the M TDM output sub-flows to one of the M deslicers.

Preferably, the TDM switches are configured in a same way, namely they are configured to switch the content of K input sub-tributaries received from a same slicer during a certain timeslot into K output sub-tributaries transmitted to a same deslicer during a same timeslot.

Preferably, each deslicer of the M deslicers is configured to receive K TDM output sub-flows, namely to receive the k^{th} TDM output sub-flow from the k^{th} TDM switch, k being an integer index ranging from 1 to K, and to merge the K TDM output sub-flows on a per-tributary basis, thereby providing a TDM output flow at its output.

Preferably, the crossbar further comprises, for each one of the M deslicers, at least one demapper configured to demap a respective client signal from at least one output tributary of the TDM output flow provided at the output of the deslicer.

Preferably, the crossbar further comprises at least one TDM protection switch, the slicer comprising a protection bridge configured to connect the slicer to both one of the K TDM switches and the at least one TDM protection switch, and the deslicer comprises a protection select configured to selectively connect the deslicer to the at least one TDM protection switch or the at least one TDM protection switch.

According to a second aspect, the present invention provides a communication network comprising a crossbar as set forth above.

### Brief description of the drawings

The present invention will become clearer by reading the following detailed description, given by way of example and not of limitation, to be read by referring to the accompanying drawings, wherein:
- Figure 1 shows a crossbar according to a first embodiment of the present invention; and
- Figure 2 shows a crossbar according to a second embodiment of the present invention.

### Detailed description of preferred embodiments of the invention

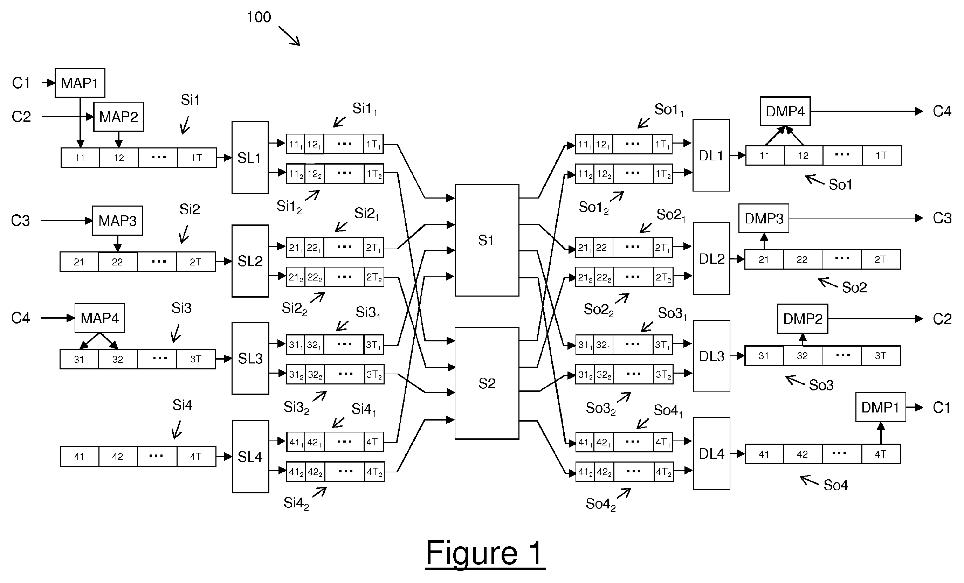

Figure 1 schematically shows a crossbar 100 according to a first embodiment of the present invention.

The crossbar 100 preferably comprises a number K of TDM (Time Division Multiplexing) switches, K being an integer number equal to or higher than 1. By way of non limiting example, hereinafter it is assumed that K=2. Hence, the crossbar 100 shown in Figure 1 comprises K=2 TDM switches S1 and S2. The TDM switches S1, S2 may be for instance SDH/Sonet switches. Each TDM switch S1, S2 is preferably implemented as an ASIC. The ASICs of the TDM switches S1, S2 are mounted on one or more fabric boards.

Each TDM switch S1, S2 has N input ports and N output ports, N being an integer number equal to or higher than 2. Hereinafter, by way of non limiting example, it is assumed that N=4. Hence, each TDM switch S1, S2 of the crossbar 100 shown in Figure 1 comprises N=4 input ports and N=4 output ports. Each input port and each output port of each TDM switch preferably has a capacity equal to C (expressed e.g. in Gb/s or Tb/s), the maximum capacity of each TDM switch being accordingly C*N.

According to preferred embodiments of the present invention, the crossbar 100 also preferably comprises M slicers, M being an integer number equal to or higher than 1 and equal to or lower than N. In other words, the number M of slicers is comprised between 1 and the number N of input ports of each TDM switch. Hereinafter, by way of non limiting example, it is assumed that M=N=4. Hence, the crossbar 100 of Figure 1 comprises four slicers SL1, SL2, SL3, SL4. Each slicer SL1, SL2, SL3, SL4 preferably has a single input and K=2 outputs, namely one output for each TDM switch S1, S2. The k^{th} output (k=1, 2) of the m^{th} slicer SLm (m=1, 2, 3, 4) is preferably connected to the m^{th} input port of the k^{th} TDM switch. The number K is also termed herein after "depth" of the slicer.

According to preferred embodiments of the present invention, the crossbar 100 also preferably comprises M deslicers. Since M=N=4 by way of non limiting example, the crossbar 100 shown in Figure 1 comprises four deslicers DL1, DL2, DL3, DL4. Each deslicer DL1, DL2, DL3, DL4 preferably has a single output and K=2 inputs, namely one input for each TDM switch S1, S2. The k^{th} input (k=1, 2) of the m^{th} deslicer DLm (m=1, 2, 3, 4) is preferably connected to the m^{th} output port of the k^{th} TDM switch.

The crossbar 100 also preferably comprises, for each slicer SL1, SL2, SL3, SL4, a respective pool of mappers comprising at least one mapper connected to the input of the slicer. Within a mapper pool associated with a certain slicer, a separate mapper is preferably provided for each client signal that shall be input to the crossbar 100 via that slicer, as it will be described in detail herein after. For not overloading the drawing, in Figure 1 only four mappers are shown, namely: MAP1 and MAP2 connected to the input of the slicer SL1, MAP3 connected to the input of the slicer SL2, and MAP4 connected to the input of the slicer SL3. The pools of mappers associated to the slicers SL1, SL2, SL3 may however comprise other mappers, not shown in Figure 1.

The crossbar 100 also preferably comprises, for each deslicer DL1, DL2, DL3, DL4, a respective pool of demappers comprising at least one demapper connected to the output of the deslicer. Within a demapper pool associated with a certain deslicer, a separate demapper is preferably provided for each client signal that shall be output from the crossbar 100 via that deslicer, as it will be described in detail herein after. In Figure 1 only the four demappers corresponding to the four mappers MAP1, MAP2, MAP3, MAP4 are shown, namely: DMP1 (corresponding to the mapper MAP1) connected to the deslicer DL4, DMP2 (corresponding to the mapper MAP2) connected to the deslicer DL3, DMP3 (corresponding to the mapper MAP3) connected to the deslicer DL2, and DMP4 (corresponding to the mapper MAP4) connected to the deslicer DL1. The pools of demappers associated with the deslicers DL1, DL2, DL3 may however comprise other demappers, not shown in Figure 1.

The operation of the crossbar 100 will be now described in detail.

The crossbar 100 is preferably configured to receive a number of client signals, including e.g. the client signals C1, C2, C3 and C4 shown in Figure 1. The client signals C1, C2, C3 and C4 may be for instance SDH/Sonet signals, Ethernet signals, OTN (Optical Transport Network) signals, Fiber Channel signal, and so on.

As each client signal is received at crossbar 100, it is preferably received by a respective mapper, which maps it into one or more tributaries of a TDM input flow. Preferably, within the crossbar 100, a TDM input flow Si1, Si2, Si3, Si4 is provided for each slicer SL1, SL2, SL3, SL4, meaning that the number of TDM input flows in which the client signals received at the crossbar 100 may be mapped is equal to the number of slicers, namely M=4. Each TDM input flow Sim (m=1, 2, 3, 4) is preferably configured to carry T tributaries m1, m2, ... mT (T being an integer number equal to or higher than 2). The transmission of the T input tributaries m1, m2, ... mT within the TDM input flow Sim is organized according to a periodic pattern, whose elementary structure is a TDM frame divided into T timeslots, each timeslot being dedicated to the transmission of one tributary. Figure 1 shows a single TDM frame of each TDM input flow Si1, Si2, Si3, Si4. The TDM frames may be for instance SDH/Sonet frames. Alternatively, a TDM proprietary format may be used. Basically, any TDM format may be used, since the TDM input flows are initiated and terminated within the crossbar 100 and are accordingly not visible from outside the device. The capacity of each TDM input flow Sim is preferably C*K (C being the capacity of a single port of the TDM switches, as mentioned above). All the M=4 TDM input flows Si1, Si2, Si3, Si4 are preferably generated based on a same clock providing the reference time base of the crossbar 100, and are reciprocally synchronized.

Each mapper of a pool associated with a certain slicer SLm (m=1, 2, 3, 4) is preferably associated with one or more tributaries of the TDM input flow Sim provided to that slicer SLm. Hence, each mapper maps the received client signal into the associated one or more tributaries. For instance, by referring to the exemplary case of Figure 1, the mapper MAP1 maps the client signal C1 into the tributary 11 of the TDM input flow Si1, the mapper MAP2 maps the client signal C2 into the tributary 12 of the TDM input flow Si1, the mapper MAP3 maps the client signal C3 into the tributary 22 of the TDM input flow Si2, and the mapper MAP4 maps the client signal C4 into the tributaries 31, 32 of the TDM input flow Si3.

The number of tributaries that each mapper uses for mapping the received client signal depends on the bitrate of the client signal. If the bitrate of the client signal is lower than the bitrate of a tributary, a single tributary is sufficient for mapping the client signal. This is the case e.g. for client signals C1, C2 and C3 shown in Figure 1. If the bitrate of the client signal is instead higher than the bitrate of a tributary, multiple tributaries of the same TDM input flow are needed for mapping that client signal. This is the case e.g. for the client signal C4 shown in Figure 1. The multiple tributaries of a TDM input signal in which a client signal is mapped may be adjacent (as shown in Figure 1 for C4) or non adjacent.

Furthermore, multiple mappers of a same pool are preferably allowed to map the respective client signals into a same TDM input flow, provided they use different tributaries. This is the case e.g. for the mappers MAP1 and MAP2, which map the respective client signals C1 and C2 into different tributaries of the TDM input flow Si1.

The bitrate of the tributaries of the TDM input flows Si1, Si2, Si3, Si4 is preferably selected so as to optimize the operation of the crossbar 100. In particular, as known the overall capacity of a TDM input flow increases with the tributary bitrate and the number T of tributaries. Hence, a certain overall capacity C*K may be achieved either by using a higher tributary bitrate in combination with a lower number T of tributaries, or using a lower tributary bitrate in combination with a higher number T of tributaries.

The first approach results in a reduction of the complexity of each single TDM switch, which scales with the number T of tributaries. However, the reduction of the number T of tributaries entails a rougher granularity in the mapping of the client signals (since, as described herein after, each mapper maps the respective client signal into an integer number 1, 2, etc. of tributaries), which in some cases might lead to a non optimum exploitation of the capacity offered by the crossbar 100. According to a first variant of the present invention following this approach, the bitrate of the tributaries of the TDM input flows Si1, Si2, Si3, Si4 is preferably selected slightly higher than the minimum client bitrate that shall be switched by the crossbar 100 (namely, the tributary bitrate is selected higher than the bitrate of the minimum bitrate client signal, but lower than the bitrates of the other client signals). This way, the number T of tributaries is advantageously minimized.

The second approach, on the other hand, allows mapping the client signals into the TDM input flows with a finer granularity, and hence allows exploiting the capacity of the crossbar 100 in a more efficient way. According to second variants of the present invention following this approach, the tributary bitrate is selected in order to optimize the mapping of one or more client signals (e.g. the most "used" ones). This might lead to decreasing the tributary bitrate, even to a value lower than the bitrates of all the client signals that shall be switched by the crossbar 100. According to such variants, the complexity of each single TDM switch is increase but, advantageously, the capacity of the crossbar 100 is exploited in a more efficient way, due to the reduced granularity of the mapping.

Each mapper preferably "adapts" the bitrate of the respective client signal to the tributary bitrate of the TDM input flows using a bit stuffing technique. This allows adapting any client bitrate to the tributary bitrate of the TDM input flows, namely to the clock of the crossbar 100. The operation of each mapper is for example that described in EP 1 742 399, in the name of the same Applicant.

The number of client signals that may be input to the crossbar 100 therefore depend on the overall capacity of the M=4 TDM input flows Si1, Si2, Si3, Si4 in which the client signals may be mapped, as well as on the bitrates of the client signals. If, as mentioned above, C*K is the capacity of each TDM input flow Sim, the overall available capacity is C*M*K.

As each client signal is mapped into one or more tributaries of a TDM input flow Sim, the TDM input flow Sim is received by the respective slicer SLm.

Then, each slicer SLm preferably slices the respective TDM input flow Sim into K=2 TDM input sub-flows Sim₁, Sim₂. If C*K is the capacity of the TDM input flow Sim, each TDM sub-flow Sim₁, Sim₂ has accordingly a capacity equal to C. Each slicer SLm preferably slices the respective TDM input flow Sim on a per-tributary basis. In other words, each slicer SLm preferably slices each tributary mt (t=1, 2, ... T) of the respective TDM input flow Sim into K=2 sub-tributaries mt₁, mt₂ and inserts them in the TDM input sub-flows Sim₁, Sim₂, respectively. Hence, the k^{th} TDM input sub-flow (k=1, 2) carries T sub-tributaries m1ₖ, m2ₖ, ... mTₖ, each sub-tributary being a "slice" of one of the T tributaries m1, m2, ... mT. In particular, with reference to Figure 1, the tributary 11 carrying the client signal C1 is sliced in sub-tributaries 11₁ and 11₂, the tributary 12 carrying the client signal C2 is sliced in sub-tributaries 12₁ and 12₂, the tributary 22 carrying the client signal C3 is sliced in sub-tributaries 22₁ and 22₂, and the tributaries 31 and 32 carrying the client signal C4 are sliced in sub-tributaries 31₁, 32₁ and 31₂, 32₂. Each slicer SLm preferably formats the respective TDM input sub-flows Sim₁, Sim₂ as described in US 7,602,776, in the name of the same Applicant. According other embodiments, other formats may be used, e.g. the TFI-5 TDM Fabric to Framer Interface format standardized by OIF (Optical Internetworking Forum).

Then, each slicer SLm preferably sends the k^{th} TDM input sub-flow to the m^{th} input port of the k^{th} TDM switch.

Hence, preferably, the k^{th} TDM switch Sk (k=1, 2) preferably receives M=4 TDM input sub-flows Si1ₖ, Si2ₖ, Si3ₖ, Si4ₖ, the m^{th} TDM input sub-flow (m= 1, 2, 3, 4) being received from the k^{th} output of the m^{th} slicer SLm.

The k^{th} TDM switch Sk is preferably configured to output M=4 TDM output sub-flows So1ₖ, So2ₖ, So3ₖ, So4ₖ, the m^{th} TDM output sub-flow being transmitted from the TDM switch Sk to the k^{th} input of the m^{th} deslicer. The TDM output sub-flows So1ₖ, So2ₖ, So3ₖ, So4ₖ preferably have the same structure, format and capacity as the TDM input sub-flows Si1ₖ, Si2ₖ, Si3ₖ, Si4ₖ. In particular, each TDM output flow Som (m=1, 2, 3, 4) is preferably configured to carry T tributaries m1, m2, ... mT (T being an integer number equal to or higher than 2). Further, the capacity of each TDM output flow Som is preferably C*K (C being the capacity of a single port of the TDM switches, as mentioned above). Furthermore, all the M=4 TDM output flows So1, So2, So3, So4 are preferably generated based on a same clock providing the reference time base of the crossbar 100, and are reciprocally synchronized.

Preferably, the k^{th} TDM switch Sk is configured to carry out a non-blocking interconnectivity function between the T sub-tributaries of the M=4 TDM input sub-flows Si1ₖ, Si2ₖ, Si3ₖ, Si4ₖ and T sub-tributaries of the M=4 TDM output sub-flows So1ₖ, So2ₖ, So3ₖ, So4ₖ. In particular, "non-blocking interconnectivity function" means that the k^{th} TDM switch Sk is capable of switching the content of anyone of the T sub-tributaries of anyone of the received TDM input sub-flows Si1ₖ, Si2ₖ, Si3ₖ, Si4ₖ into anyone of the T sub-tributaries of anyone of the TDM output sub-flows So1ₖ, So2ₖ, So3ₖ, So4ₖ.

Preferably, the TDM switches S1, S2 are all configured in the same way, namely they are configured to switch the content of the K=2 sub-tributaries mt₁, mt₂ received from a same slicer SLm during a same timeslot (namely, originating from a same tributary mt) into K=2 sub-tributaries that are transmitted to a same deslicer DLm during a same timeslot. For instance, as to the sub-tributaries 11₁ and 11₂ derived from the tributary 11 of the TDM input flow Si1, the TDM switch S1 preferably switches the sub-tributary 11₁ into e.g. the sub-tributary 4T₁ of the TDM output sub-flow So4₁, while the TDM switch S2 preferably switches the sub-tributary 11₂ into the sub-tributary 4T₂ of the TDM output sub-flow So4₂. As to the sub-tributaries 12₁ and 12₂ derived from the tributary 12 of the TDM input flow Si1, the TDM switch S1 preferably switches the sub-tributary 12₁ into e.g. the sub-tributary 32₁ of the TDM output sub-flow So3₁, while the TDM switch S2 preferably switches the sub-tributary 12₂ into the sub-tributary 32₂ of the TDM output sub-flow So3₂. As to the sub-tributaries 22₁ and 22₂ derived from the tributary 22 of the TDM input flow Si2, the TDM switch S1 preferably switches the sub-tributary 22₁ into e.g. the sub-tributaries 21₁ of the TDM output sub-flow So2₁, while the TDM switch S2 preferably switches the sub-tributary 22₂ into the sub-tributary 21₂ of the TDM output sub-flow So2₂. As to the sub-tributaries 31₁, 32₁ and 31₂, 32₂ derived from the tributaries 31, 32 of the TDM input flow Si3, the TDM switch S1 preferably switches the sub-tributaries 31₁ and 32₁ into e.g. the sub-tributaries 11₁ and 12₁ of the TDM output sub-flow So1₁, while the TDM switch S2 preferably switches the sub-tributaries 31₂ and 32₂ into the sub-tributaries 11₂ and 12₂ of the TDM output sub-flow So1₂.

Hence, the m^{th} deslicer DLm (m=1, 2, 3, 4) receives K=2 TDM output sub-flows Som₁, Som₂, one from each TDM switch S1, S2. Thanks to the fact that the TDM switches S1, S2 have the same configuration, the K=2 TDM output sub-flows Som₁, Som₂ received at a same deslicer SLm carry, during each timeslot, "slices" of the same client signal.

Each deslicer DLm therefore merges the received K=2 TDM output sub-flows Som₁, Som₂ (that, as discussed above, have capacity equal to C) into a single TDM output flow Som (m=1, 2, 3, 4) having capacity equal to C*K. The merging of the K=2 TDM output sub-flows Som₁, Som₂ is made on a per-tributary basis. For instance, with reference to the exemplary scenario of Figure 1, the deslicer SL1 merges the sub-tributaries 11₁ and 11₂ (that carry portions of client signal C4) into tributary 11 the TDM output flow So1, and the sub-tributaries 12₁ and 12₂ (that carry portions of client signal C4, too) into tributary 12 the TDM output flow So1. Similarly, the deslicer SL2 merges the sub-tributaries 21₁ and 21₂ (that carry portions of client signal C3) into tributary 21 of the TDM output flow So2. Similarly, the deslicer SL3 merges the sub-tributaries 32₁ and 32₂ (that carry portions of client signal C2) into tributary 32 of the TDM output flow So3. Similarly, the deslicer SL4 merges the sub-tributaries 4T₁ and 4T₂ (that carry portions of client signal C1) into tributary 4T of the TDM output flow So4.

Hence, each deslicer DL1, DL2, DL3, DL4 provides a TDM output flow So1, So2, So3, So4 whose tributaries may carry portions of the client signals as mapped in the tributaries of the TDM input flows Si1, Si2, Si3, Si4. It can be appreciated, therefore, that the assembly comprising slicers, TDM switches and deslicers in its entirety operates as a distributed TDM switch having capacity C*M*K. This arrangement provides advantages in terms of scalability of the crossbar capacity, as it will be described in detail herein after.

Preferably, each TDM output flow So1, So2, So3, So4 is processed by one or more demappers which extract one or more client signals therefrom. In particular, each demapper of a demapper pool associated with a certain deslicer SLm (m=1, 2, 3, 4) is preferably associated with one or more tributaries of the TDM output flow Sim provided by that deslicer DLm. Hence, each demapper preferably extracts a respective client signal from the associated one or more tributaries. For instance, by referring to the exemplary scenario of Figure 1, the demapper DMP1 extracts the client signal C1 from the tributary 4T of the TDM output flow So4, the demapper DMP2 extracts the client signal C2 from the tributary 32 of the TDM output flow So2, the demapper DMP3 extract the client signal C3 from the tributary 21 of the TDM output flow So2, and the demapper DMP4 extracts the client signal C4 from the tributaries 11, 12 of the TDM output flow So1. The operation of each demapper is preferably that described in EP 1 742 399, in the name of the same Applicant.

Hence, by considering the behavior of the crossbar 100 as a whole, the crossbar 100 receivers at its inputs client signals and is capable of switching each one of them towards anyone of its output, thereby implementing a non-blocking interconnection function. The output through which every client signal is directed is determined by selecting one or more available tributary (depending on the bitrate of the client signal) within one of the backpanel TDM input flows of the crossbar 100 and by configuring the K TDM switches of the crossbar so as they direct the content of that tributary to a corresponding tributary within a certain TDM output flow that leads towards the desired output.

Mappers and demappers advantageously allow the crossbar 100 operating with any signal format in a transparent way. Indeed, although the interconnectivity function of the crossbar is implemented as a TDM switching mechanism, such mechanism is not visible from outside the crossbar. The client signals are indeed mapped at the input of the crossbar into the backpanel TDM frames, which are then switched by TDM switch(es) before the client signals are extracted therefrom. Hence, while at the backpanel the crossbar basically is a TDM switch, at the front panel the crossbar is a transparent device, which may carry out its interconnectivity function upon any signal format.

As mentioned above, the implementation of the interconnectivity function of the crossbar by means of TDM switches is advantageous in terms of scalability of the crossbar capacity. Indeed, while known implementations of crossbar exhibit a quadratic (or, in any case, more than linear) growth of their complexity as a function of the device overall capacity, the complexity of the crossbar 100 advantageously linearly scales with the capacity of the device. As mentioned above, the capacity of the crossbar 100 comprising K TDM switches, M slicers and M deslicers is equal to C*M*K, C being the capacity of a single port of a TDM switch. It may be noticed that the capacity of the crossbar depends both on the number M of slicers/deslicers and on the number K of TDM switches.

Hence, the capacity of the crossbar 100 may be firstly increased by increasing the number M of slicers/deslicers. The number M however may be increased only to a maximum value N, which is the number of input ports and output ports of each TDM switch of the crossbar.

If a further increase of the crossbar capacity is required, the number K of TDM switches may be advantageously increased. The capacity of the crossbar depends linearly from K. Hence, for instance, the capacity C*M*K of the crossbar may be doubled by providing a double number of TDM switches. Increasing the number K of TDM switches while preserving the full interconnectivity capability of the crossbar requires to increase also the "depth" of the M slicers, namely the number of TDM sub-flows derived by slicing each TDM flow carrying portions of the client signal. This however entails a negligible increase in the complexity of the crossbar, that accordingly substantially linearly scales with the capacity of the device.

The Applicant has obtained positive results with a crossbar including K=8 TDM switches, each one having a capacity C*M=2.4 Tb/s, and M=192 slicers/deslicers, thereby obtaining an overall capacity equal to 19.2 Tb/s.

A further advantage of the crossbar according to the present invention is that the device capacity may be increased in a gradual way, e.g. in a "pay per grow" manner. To this purpose, the crossbar may be initially provided with a certain number K of TDM switches upon its deployment. The initial cost of the crossbar is therefore basically the cost of the K TDM switches. Then, mappers, demappers, slicers and deslicers may be gradually added during the lifetime of the crossbar, so as to gradually increase its capacity. For instance, M<N slicers and deslicers may be deployed initially, with the respective mappers and demappers. It may be appreciated that the crossbar 100 works even when the number M of slicers and deslicers is lower than N (namely, the number of input ports and output ports of each TDM switch). The only difference, relative to the operation of the crossbar 100 shown in Figure 1 and described above, is that in each TDM switch not all the available input ports and output ports are exploited, the full capacity of the crossbar C*N'*K being then not exploited. For instance, with reference to the exemplary crossbar 100 shown in Figure 1, the slicer SL4 and the deslicer DL4 may be initially omitted, M being equal to 3. By increasing M up to its maximum value N, the maximum capacity C*N*K may be gradually reached.

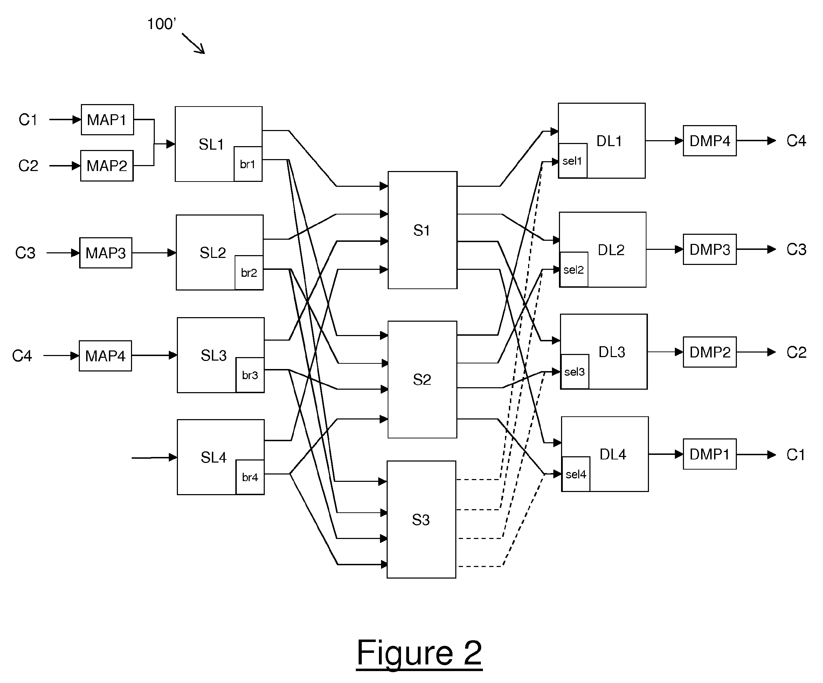

Moreover, advantageously, differently from known crossbar implementations, the assembly formed by slicers, TDM switches and deslicers may be protected by any protection scheme currently used for protecting TDM switches, e.g. an EPS (Electronic Protection Switch) scheme, such as 1+1 or N+1. This will be explained herein after in further detail with reference to Figure 2.

Figure 2 shows a crossbar 100' similar to that of Figure 1, except that it comprises a further TDM switch S3 for implementing a 1+1 protection mechanism of the TDM switch S2. For not overloading the drawing, Figure 2 only shows the components of the crossbar, while the structure of the TDM flows and sub-flows exchanged by the components within the crossbar has been omitted. Preferably, an output of each slicer SL1, SL2, SL3, SL4 is provided with a protection bridge (e.g. an EPS bridge) br1, br2, br3, br4 suitable for connecting the output of the slicer both to an input port of the TDM switch S2 and to an input port of the TDM switch S3. On the other hand, an input of each deslicer DL1, DL2, DL3, DL4 is provided with a protection selector (e.g. an EPS selector) sel1, sel2, sel3, sel4 suitable for selectively connecting the input of the deslicer to either an output port of the TDM switch S2 or an output port of the TDM switch S3. In case the TDM switch S2 is not failed, the operation of the crossbar 100' is substantially the same as the crossbar 100 described above, the only difference being that the slicers send the input sub-flows directed to the TDM switch S2 also to the TDM switch S3. If a failure occurs in the TDM switch S2, the protection selectors sel1, sel2, sel3, sel4 of the deslicers SL1, SL2, SL3 and SL4 are preferably automatically reconfigured so as to receive from the TDM switch S3 the respective TDM output sub-flows originally coming from the TDM switch S2.

For simplicity, in the crossbar 100' only the TDM switch S2 is protected by a 1+1 protection mechanism. According to preferred variants, however, each one of the K TDM switches of the crossbar is protected by a 1+1 protection mechanism. This is implemented by providing 2K TDM switches, namely K working TDM switches and K protection TDM switches. In such case, each one of the K outputs of each slicer is preferably provided with a respective protection bridge suitable for connecting that output of the slicer to both a working TDM switch and a protection TDM switch. Besides, according to such variants, each one of the K inputs of each deslicer is preferably provided with a respective protection selector suitable for selectively connecting that input of the deslicer to either a working TDM switch or a protection TDM switch.

According to other embodiments implementing a N+1 protection scheme, the crossbar comprises K+1 TDM switches, namely K working TDM switches and one protection TDM switch which provides shared protection to all the K working TDM switches. According to still other embodiments, the crossbar comprises K+K' TDM switches (K'<K), namely K working TDM switches and K' protection TDM switches, each protection TDM switch providing shared protection to a pool of K/K' working TDM switches.

A further advantage of the crossbar according to the present invention is that the capacity of the crossbar may be varied in a hitless manner, namely without interrupting or affecting transmission of the existing client signals. Indeed, as mentioned above, the capacity of the crossbar may be increased by increasing the number K of TDM switches. Operatively, this is performed by adding one or more new TDM switch(es) in the device. Then, the slicers and deslicers are connected to the input ports and output ports of the new TDM switch(es). As far as the new TDM switch(es) are inactive, the traffic continues being sent to the active TDM switches only. Such traffic is therefore unaffected. As the new TDM switch(es) are activated, traffic starts being sent from the slicers to the new TDM switch(es) too. If the change of connectivity is synchronized at all the slicers, it is performed in a hitless manner. It shall be noticed that, when the change of connectivity takes place, the depth K of the slicers and deslicers shall be increased, since the number K of active TDM switches is increased. This change of depth may be performed in a hitless manner too, provided all the slicers start dividing each tributary in an increased number K of sub-tributaries in a synchronized way (namely, starting from a same tributary). In order to enable such hitless change of depth of slicers and deslicers, the tributaries of the TDM input flows preferably comprise a number of bit/bytes divisible by each value that the number K will assume during the lifetime of the crossbar (namely, the values that the number K of TDM switches included in the crossbar may take during its lifetime shall be decided a priori).

Therefore, the crossbar according to the present invention advantageously is capable of implementing a full non-blocking interconnectivity function on any client signal, independently on the signal format, while having a complexity that linearly scales with the capacity of the device. Possibility to gradually change the capacity in a very flexible and hitless way and to implement protection mechanisms within the TDM "core" of the crossbar are also advantageous features of the crossbar of the invention.

The functions of the various elements shown in the Figures 1 and 2, including any functional blocks labeled as "device", "unit", "block" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

## Claims

1. A crossbar (100, 100') for a communication network, said crossbar (100, 100') comprising:
- a mapper (MAP1) configured to receive a client signal (C1) and to map said client signal (C1) into at least one tributary (11) of a TDM input flow (Si1);
- a slicer (SL1) configured to slice said TDM input flow (Si1) into K TDM input sub-flows (Si1₁, Si1₂) on a per-tributary basis, by slicing said input tributary (11) into K input sub-tributaries (11₁, 11₂) of said K TDM input sub-flows (Si1₁, Si1₂), K being an integer number equal to or higher than 2;
- K TDM switches (S1, S2), each TDM switch being configured to receive a respective TDM input sub-flow (Si1₁, Si1₂) and to switch the input sub-tributary of the received TDM input sub-flow into an output sub-tributary of a TDM output sub-flow, said K TDM switches (S1, S2) thereby providing K TDM output sub-flows (So4₁, So4₂) comprising K output sub-tributaries (4T₁, 4T₂) carrying said client signal (C1);
- a deslicer (DL4) configured to merge said K TDM output sub-flows (So4₁, So4₂) in a TDM output flow (So4) on a per-tributary basis, by merging said K output sub-tributaries (4T₁, 4T₂) into an output tributary (4T) of said TDM output flow (So4); and
- a demapper (DMP1) configured to extract said client signal (C1) from said output tributary (4T) of said TDM output flow (So4).

2. The crossbar (100, 100') according to claim 1, wherein said mapper (MAP1) is configured to map said client signal (C1) into one or more input tributaries of said TDM input flow (Si1), the number of input tributaries of said TDM input flow (Si1) in which said client signal (C1) is mapped depending on the bitrate of said client signal (C1) and the bitrate of said input tributaries of said TDM input flow (Si1).

3. The crossbar (100, 100') according to claim 2, wherein said mapper (MAP1) is configured to map said client signal (C1) into:
- a single input tributary (11) of said TDM input flow (Si1), if the bitrate of said client signal (C1) is lower than the bitrate of said input tributaries of said TDM input flow (Sin1); or
- multiple input tributaries (31, 32) of said TDM input flow (Si3), if the bitrate of said client signal (C4) is higher than the bitrate of said input tributaries of said TDM input flow (Sin3).

4. The crossbar (100, 100') according to claim 2 or 3, wherein said mapper (MAP1) is configured to adapt the bitrate of said client signal (C1) to the bitrate of said input tributaries of said TDM input flow (Si1) using a bit stuffing technique.

5. The crossbar (100, 100') according to any of claims 2 to 4, wherein the bitrate of said input tributaries of said TDM input flow (Si1) is selected higher than the minimum bitrate amongst bitrates of the client signals input at said crossbar (100, 100') and lower than the bitrates of said client signals excluded said minimum bitrate.

6. The crossbar (100, 100') according to any of the preceding claims, wherein:
- each one of said K TDM switches (S1, S2) has N input ports and N output ports, N being an integer number equal to or higher than 2;
- the crossbar (100, 100') comprises M slicers (SL1, SL2, SL3, SL4) including said slicer (SL1), M being an integer number equal to or higher than 1 and equal to or lower than N, each slicer of said M slicers (SL1, SL2, SL3, SL4) having an input and K outputs, the input of each slicer (SL1, SL2, SL3, SL4) being suitable for receiving a respective TDM input flow (Si1, Si2, Si3, Si4) and the k^{th} output of each slicer being connected to one of said N input ports of the k^{th}TDM switch (S1, S2), k being an integer index ranging from 1 to K; and
- the crossbar (100, 100') comprises M deslicers (DL1, DL2, DL3, DL4) including said deslicer (DL4), each deslicer of said M deslicers (DL1, DL2, DL3, DL4) having a single output and K inputs, the output of each deslicer (DL1, DL2, DL3, DL4) being suitable for providing a respective TDM output flow (So1, So2, So3, So4) and the k^{th} input of each deslicer being connected to one of said N output ports of the k^{th} TDM switch (S1, S2), k being an integer index ranging from 1 to K.

7. The crossbar (100, 100') according to claim 6, wherein said TDM input flows (Si1, Si2, Si3, Si4) provided at the inputs of said M slicers (SL1, SL2, SL3, SL4) are generated on a same time basis and are reciprocally synchronized.

8. The crossbar (100, 100') according to claim 6 or 7, wherein it further comprises, for each slicer of said M slicers (SL1, SL2, SL3, SL4), at least one mapper (MAP1, MAP2) configured to map a respective client signal (C1, C2) into at least one input tributary of the TDM input flow (Si1, Si2, Si3, Si4) received at the input of said slicer (SL1, SL2, SL3, SL4).

9. The crossbar (100, 100') according to any of claims 6 to 8, wherein each slicer of said M slicers (SL1, SL2, SL3, SL4) is configured to slice the TDM input flow (Si1, Si2, Si3, Si4) received at its input into K TDM input sub-flows on a per-tributary basis, and to forward the k^{th} TDM input sub-flow to the k^{th} TDM switch (S1, S2), k being an integer index ranging from 1 to K.

10. The crossbar (100, 100') according to claim 9, wherein each one of said K TDM switches (S1, S2) is configured to receive M TDM input sub-flows, namely one TDM input sub-flow from each one of said M slicers (SL1, SL2, SL3, SL4), to carry out a non-blocking interconnectivity function between said M TDM input sub-flows and M TDM output sub-flows, and to forward each one of said M TDM output sub-flows to one of said M deslicers (DL1, DL2, DL3, DL4).

11. The crossbar (100, 100') according to claim 10, wherein said TDM switches (S1, S2) are configured in a same way, namely they are configured to switch the content of K input sub-tributaries received from a same slicer during a certain timeslot into K output sub-tributaries transmitted to a same deslicer during a same timeslot.

12. The crossbar (100, 100') according to claim 10 or 11, wherein each deslicer of said M deslicers (DL1, DL2, DL3, DL4) is configured to receive K TDM output sub-flows, namely to receive the k^{th} TDM output sub-flow from the k^{th} TDM switch (S1, S2), k being an integer index ranging from 1 to K, and to merge said K TDM output sub-flows on a per-tributary basis, thereby providing a TDM output flow (So1, So2, So3, So4) at its output.

13. The crossbar (100, 100') according to claim 12, wherein it further comprises, for each deslicer of said M deslicers (DL1, DL2, DL3, DL4), at least one demapper configured to demap a respective client signal from at least one output tributary of the TDM output flow (So1, So2, So3, So4) provided at the output of said deslicer (DL1, DL2, DL3, DL4).

14. The crossbar (100, 100') according to any of the preceding claims, wherein it further comprises at least one TDM protection switch (S3), said slicer (SL1) comprising a protection bridge (br1) configured to connect said slicer (SL1) to both one of said K TDM switches (S1, S2) and said at least one TDM protection switch (S3), and said deslicer (DL4) comprises a protection select (sel4) configured to selectively connect said deslicer (DL4) to said at least one TDM protection switch (S1, S2) or said at least one TDM protection switch (S3).

15. A communication network comprising a crossbar (100, 100') according to any of the preceding claims.

## Patentansprüche

1. Ein Koppelfeld (100, 100') für ein Kommunikationsnetzwerk, wobei besagtes Koppelfeld (100, 100') umfasst:
- einen Mapper (MAP1), konfiguriert für den Empfang eines Kundensignals (C1) und für das Mappen besagten Kundensignals (C1) in mindestens ein Tributary (11) eines TDM-Eingangsflusses (Si1);
- einen Slicer (SL1), der konfiguriert ist für das Slicen besagten TDM-Eingangsflusses (Si1) in K TDM-Eingangsunterflüsse (Si1₁, Si1₂) auf Pro-Tributary-Basis, was durch das Slicen besagten Tributarys (11) in K Eingangs-Untertributarys (11₁, 11₂) besagter K TDM-Eingangsunterflüsse (Si1₁, Si1₂) erfolgt, wobei K eine ganze Zahl gleich oder größer als 2 ist;
- K TDM-Schalter (S1, S2), wobei jeder TDM-Schafter konfiguriert ist für den Empfang eines entsprechenden TDM-Eingangsunterflusses (Si1₁, Si1₂) sowie für das Schalten des Eingangs-Untertributarys des emfpangenen TDM-Eingangsunterflusses in ein Ausgangs-Untergtributary eines TDM-Ausgangsunterflusses, wobei besagte K TDM-Schalter (S1, S2) dadurch K TDM-Ausgangsunterflüsse (So4₁, So4₂) zur Verfügung stellen, die K Ausgangs-Untertributarys (4T₁, 4T₂) umfassen, die besagtes Kundensignal (C1) tragen;
- einen Deslicer (DL4), der konfiguriert ist für das Zusammenführen besagter K TDM Ausgangsunterflüsse (So4₁, So4₂) in einem TDM-Ausgangsfluss (So4) auf Pro-Tributary-Basis, was durch das Zusammenführen besagter K Ausgangs-Untertributarys (4T₁, 4T₂) in ein Ausgangs-Tributary (4T) besagten TDM-Ausgangsflusses (So4) erfolgt; und einen Demapper (DMP1), der konfiguriert ist für das Auslesen besagen Kundensignals (C1) aus besagtem Ausgangs-Tributary (4T) besagten TDM-Ausgangsflusses (So4).

2. Das Koppelfeld (100, 100') nach Anspruch 1, wobei besagter Mapper (MAP1) konfiguriert ist für das Mappen besagten Kundensignals (C1) in ein oder mehrere Eingangs-Tributarys besagten TDM-Eingangsflusses (Si1), wobei die Anzahl der Eingangs-Tributarys besagten TDM-Eingangsflusses (Si1), in welchen besagtes Kundensignal (C1) gemappt wird, abhängt von der Bitrate besagten Kundensignals (C1) und der Bitrate besagter Eingangs-Tributarys besagten TDM-Eingangsflusses (Si1).

3. Das Koppelfeld (100, 100') nach Anspruch 2, wobei besagter Mapper (MAP1) konfiguriert ist für das Mappen besagten Kundensignals (C1) in:
- ein einzelnes Ausgangs-Tributary (11) besagten TDM-Eingangsflusses (Si1), wenn die Bitrate besagten Kundensignals (C1) niedriger ist als die Bitrate besagten Eingangs-Tributarys besagten TDM-Eingangsflusses (Sin1); oder
- multiple Eingangs-Tributarys (31, 32) besagten TDM-Eingangsflusses (Si3), wenn die Bitrate besagten Kundensignals (C4) höher ist als die Bitrate besagter Eingangs-Tributarys besagten TDM-Eingangsflusses (Sin3).

4. Das Koppelfeld (100, 100') nach Anspruch 2 oder 3, wobei besagter Mapper (MAP1) konfiguriert ist für das Anpassen der Bitrate besagten Kundensignals (C1) an die Bitrate besagter Eingangs-Tributarys besagten TDM-Eingangsflusses (Si1) unter Verwendung einer Bitstopftechnik.

5. Das Koppelfeld (100, 100') nach einem jeglichen der Ansprüche 2 bis 4, wobei die Bitrate besagten Eingangs-Tributarys besagten TDM-Eingangsflussess (Si1) höher als die Mindestbitrate aus den Bitraten der Kundensignaleingänge an besagtem Koppelfeld (100, 100') und niedriger als die Bitraten besagter Kundensignale unter Ausschluss besagter Mindestbitrate ausgewählt wird.

6. Das Koppelfeld (100, 100') nach einem jeglichen der vorgenannten Ansprüche, wobei:
- jeder der besagten K TDM-Schalter (S1, S2) über N Eingangsports und N Ausgangsports verfügt, wobei N eine ganze Zahl gleich oder größer als 2 ist;
- das Koppelfeld (100, 100') M Slicer (SL1, SL2, SL3, SL4) einschließlich besagten Slicer (SL1) umfasst, wobei M eine ganze Zahl gleich oder größer als 1 sowie gleich oder niedriger als N ist, wobei jeder Slicer der besagten M Slicer (SL1, SL2, SL3, SL4) einen Eingang und K Ausgänge hat, wobei der Eingang eines jeden Slicers (SL1, SL2, SL3, SL4) ausgelegt ist für das Empfangen eines entsprechenden TDM-Eingangsflusses (Si1, Si2, Si3, Si4) und der k^{te} Ausgang eines jeden Slicers an einen der besagten N Eingangsports des k^{ten}TDM-Schalters (S1, S2) angeschlossen ist, wobei k ein Index ganzer Zahlen von 1 bis K ist; und
- das Koppelfeld (100, 100') M Deslicer (DL1, DL2, DL3, DL4) einschließlich besagten Deslicer (DL4) umfasst, wobei jeder Deslicer der besagten M Deslicer (DL1, DL2, DL3, DL4) einen einzigen Ausgang und K Eingänge hat, wobei der Ausgang eines jeden Deslices (DL1, DL2, DL3, DL4) ausgelegt ist für das Zurverfügungstellen eines entsprechenden TDM-Ausgangsflusses (So1, So2, So3, So4) und der k^{te} Eingang eines jeden Deslicers angeschlossen ist an einen der besagten N Ausgangsports des k^{ten} TDM-Switches (S1, S2), wobei k ein Index ganzer Zahlen von 1 bis K ist.

7. Das Koppelfeld (100, 100') nach Anspruch 6, wobei besagte TDM-Eingangsunterflüsse (Si1, Si2, Si3, Si4), die an den Eingängen der besagten M Slicer (SL1, SL2, SL3, SL4) zur Verfügung gestellt werden, gleichzeitig generiert werden und wechselseitig synchronisiert sind.

8. Das Koppelfeld (100, 100') nach Anspruch 6 oder 7, wobei dieser weiterhin für jeden Slicer der besagten M Slicer (SL1, SL2, SL3, SL4) mindestens einen Mapper (MAP1, MAP2) umfasst, der konfiguriert ist für das Mappen eines entsprechenden Kundensignals (C1, C2) in mindestens ein Eingangs-Tributary des TDM-Eingangsflusses (Si1, Si2, Si3, Si4), der am Eingang besagten Slicers (SL1, SL2, SL3, SL4) empfangen wird.

9. Das Koppelfeld (100, 100') nach einem jeglichen der Ansprüche 6 bis 8, wobei jeder Slicer der besagten M Slicer (SL1, SL2, SL3, SL4) konfiguriert ist für das Slicen des als Eingang empfangenen TDM-Eingangsflusses (Si1, Si2, Si3, Si4) in K TDM-Eingangsunterflüsse auf Pro-Tributary-Basis sowie für das Weiterleiten des k^{ten} TDM-Eingangsunterflusses an den k^{ten} TDM-Schalter (S1, S2), wobei k ein Index ganzer Zahlen von 1 bis K ist.

10. Das Koppelfeld (100, 100') nach Anspruch 9, wobei jeder der K TDM-Schalter (S1, S2) konfiguriert ist für den Empfang von M TDM-Eingangsunterflüssen, und zwar eines TDM-Eingangsunterflusses von jedem der besagten M Slicer (SL1, SL2, SL3, SL4), um eine nichtblockierende Interkonnektivitätsfunktion zwischen besagten M TDM-Eingangsunterflüssen und M TDM-Ausgangsunterflüssen auszuführen, sowie um jeden der besagten M TDM-Ausgangsunterflüsse an einen der besagten M Deslicer (DL1, DL2, DL3, DL4) weiterzuleiten.

11. Das Koppelfeld (100, 100') nach Anspruch 10, wobei besagte TDM-Schalter (S1, S2) auf dieselbe Art und Weise konfiguriert sind, und zwar konkret dafür, um den Inhalt von K Eingangs-Untertributarys, die im Verlauf eines bestimmten Zeitschlitzes von ein und demselben Slicer empfangen werden, in K Ausgangs-Untertributarys zu switchen, die im Verlauf eines bestimmten Zeitschlitzes an ein und denselben Slicer übertragen werden.

12. Das Koppelfeld (100, 100') nach Anspruch 10 oder 11, wobei jeder Deslicer der besagten M Deslicer (DL1, DL2, DL3, DL4) konfiguriert ist für den Empfang von K TDM Ausgangsunterflüssen, und zwar für den Empfang des k^{ten} TDM-Ausgangsunterflusses von dem k^{ten} TDM-Schalter (S1, S2), wobei k ein Index ganzer Zahlen von 1 bis K ist, und für das Zusammenführen der besagten K TDM-Ausgangsunterflüsse auf Pro-Tributary-Basis, dadurch einen TDM-Ausgangsfluss (So1, So2, So3, So4) an seinem Ausgang bereitstellend.

13. Das Koppelfeld (100, 100') nach Anspruch 12, wobei er weiterhin für jeden Deslicer der besagten M Deslicer (DL1, DL2, DL3, DL4) mindestens einen Demapper umfasst, der konfiguriert ist für das Demappen eines entsprechenden Kundensignals mindestens eines Ausgangs-Tributarys besagten TDM-Ausgangsflusses (So1, So2, So3, So4), der am Ausgang besagten Deslicers (DL1, DL2, DL3, DL4) bereitgestellt wird.

14. Das Koppelfeld (100, 100') nach einem jeglichen der vorgenannten Ansprüche, wobei er weiterhin mindestens einen TDM-Schutzschalter (S3) umfasst, wobei besagter Slicer (SL1) eine Schutzüberbrückung (br1) umfasst, die konfiguriert ist für das Verbinden besagten Slicers (SL1) mit beiden der besagten K TDM-Schalter (S1, S2) und besagtem mindestens einem TDM-Schutzschalter (S3), und wobei besagter Deslicer (DL4) eine Schutzvorgabe (sel4) umfasst, die dafür konfiguriert ist, um besagten Deslicer (DL4) selektiv mit besagtem mindestens einem TDM-Schutzschalter (S1, S2) oder mit besagtem mindestens einem TDM-Schutzschalter (S3) zu verbinden.

15. Kommunikationsnetzwerk, ein Koppelfeld (100, 100') nach einem jeglichen der vorgenannten Ansprüche umfassend.

## Revendications

1. Commutateur crossbar (100, 100') pour un réseau de communication, ledit commutateur crossbar (100, 100') comprenant :
- un dispositif de mappage (MAP1) configuré pour recevoir un signal client (C1) et pour mapper ledit signal client (C1) dans au moins un affluent (11) d'un flux d'entrée TDM (Si1) ;
- un éminceur (SL1) configuré pour émincer ledit flux d'entrée TDM (Si1) en K sous-flux d'entrée TDM (Si1₁, Si1₂) par affluent, en éminçant ledit affluent d'entrée (11) en K sous-affluents d'entrée (11₁, 11₂) desdits K sous-flux d'entrée TDM (Si1₁, Si1₂), K étant un nombre entier supérieur ou égal à 2 ;
- K commutateurs TDM (S1, S2), chaque commutateur TDM étant configuré pour recevoir un sous-flux d'entrée TDM (Si1₁, Si1₂) respectif et pour commuter le sous-affluent d'entrée du sous-flux d'entrée TDM reçu en un sous-affluent de sortie d'un sous-flux de sortie TDM, lesdits K commutateurs TDM (S1, S2) fournissant ainsi K sous-flux de sortie TDM (So4₁, So4₂) comprenant K sous-affluents de sortie (4T₁, 4T₂) transportant ledit signal client (C1) ;
- un déséminceur (DL4) configuré pour fusionner lesdits K sous-flux de sortie TDM (So4₁, So4₂) dans un flux de sortie TDM (So4) par affluent, en fusionnant lesdits K sous-affluents de sortie (4T₁, 4T₂) en un affluent de sortie (4T) dudit flux de sortie TDM (So4) ; et
- un dispositif de démappage (DMP1) configuré pour extraire ledit signal client (C1) dudit affluent de sortie (4T) dudit flux de sortie TDM (So4).

2. Commutateur crossbar (100, 100') selon la revendication 1, dans lequel ledit dispositif de mappage (MAP1) est configuré pour mapper ledit signal client (C1) dans un ou plusieurs affluents d'entrée dudit flux d'entrée TDM (Si1), le nombre d'affluents d'entrée dudit flux d'entrée TDM (Si1) dans lequel ledit signal client (C1) est mappé dépendant du débit binaire dudit signal client (C1) et du débit binaire desdits affluents d'entrée dudit flux d'entrée TDM (Si1).

3. Commutateur crossbar (100, 100') selon la revendication 2, dans lequel ledit dispositif de mappage (MAP1) est configuré pour mapper ledit signal client (C1) dans :
- un seul affluent d'entrée (11) dudit flux d'entrée TDM (Si1), si le débit binaire dudit signal client (C1) est inférieur au débit binaire desdits affluents d'entrée dudit flux d'entrée TDM (Sin1) ; ou
- des affluents d'entrée multiples (31, 32) dudit flux d'entrée TDM (Si3), si le débit binaire dudit signal client (C4) est supérieur au débit binaire desdits affluents d'entrée dudit flux d'entrée TDM (Sin3).

4. Commutateur crossbar (100, 100') selon la revendication 2 ou 3, dans lequel ledit dispositif de mappage (MAP1) est configuré pour adapter le débit binaire dudit signal client (C1) au débit binaire desdits affluents d'entrée dudit flux d'entrée TDM (Si1) en utilisant une technique de bourrage de bits.

5. Commutateur crossbar (100, 100') selon l'une quelconque des revendications 2 à 4, dans lequel le débit binaire desdits affluents d'entrée dudit flux d'entrée TDM (Si1) est choisi supérieur au débit binaire minimum parmi les débits binaires des signaux clients entrés au niveau dudit commutateur crossbar (100, 100') et inférieur aux débits binaires desdits signaux clients à l'exception dudit débit binaire minimum.

6. Commutateur crossbar (100, 100') selon l'une quelconque des revendications précédentes, dans lequel :
- chacun desdits K commutateurs TDM (S1, S2) présente N ports d'entrée et N ports de sortie, N étant un nombre entier supérieur ou égal à 2 ;
- le commutateur crossbar (100, 100') comprend M éminceurs (SL1, SL2, SL3, SL4) comprenant ledit éminceur (SL1), M étant un nombre entier supérieur ou égal à 1 et inférieur ou égal à N, chaque éminceur parmi lesdits M éminceurs (SL1, SL2, SL3, SL4) ayant une entrée et K sorties, l'entrée de chaque éminceur (SL1, SL2, SL3, SL4) étant adaptée pour recevoir un flux d'entrée TDM respectif (Si1, Si2, Si3, Si4) et la k^{ème} sortie de chaque éminceur étant connectée à un desdits N ports d'entrée du k^{ème} commutateur TDM (S1, S2), k étant un nombre entier compris entre 1 et K ; et
- le commutateur crossbar (100, 100') comprend M déséminceurs (DL1, DL2, DL3, DL4) comprenant ledit déséminceur (DL4), chaque déséminceur parmi lesdits M déséminceurs (DL1, DL2, DL3, DL4) ayant une seule sortie et K entrées, la sortie de chaque déséminceur (DL1, DL2, DL3, DL4) étant adaptée pour fournir un flux de sortie TDM respectif (So1, So2, So3, So4) et la k^{ème} entrée de chaque déséminceur étant connectée à un desdits N ports de sortie du k^{ème} commutateur TDM (S1, S2), k étant un nombre entier compris entre 1 et K.

7. Commutateur crossbar (100, 100') selon la revendication 6, dans lequel lesdits flux d'entrée TDM (Si1, Si2, Si3, Si4) fournis aux entrées desdits M déséminceurs (SL1, SL2, SL3, SL4) sont générés sur une même base temporelle et sont synchronisés réciproquement.

8. Commutateur crossbar (100, 100') selon la revendication 6 ou 7, comprenant en outre, pour chaque éminceur parmi lesdits M éminceurs (SL1, SL2, SL3, SL4), au moins un dispositif de mappage (MAP1, MAP2) configuré pour mapper un signal client (C1, C2) respectif dans au moins un affluent d'entrée du flux d'entrée TDM (Si1, Si2, Si3, Si4) reçu à l'entrée dudit éminceur (SL1, SL2, SL3, SL4).

9. Commutateur crossbar (100, 100') selon l'une quelconque des revendications 6 à 8, dans lequel chaque éminceur parmi lesdits M éminceurs (SL1, SL2, SL3, SL4) est configuré pour émincer le flux d'entrée TDM (Si1, Si2, Si3, Si4) reçu à son entrée en K sous-flux d'entrée TDM par affluent, et pour transférer le k^{ème} sous-flux d'entrée TDM vers le k^{ème} commutateur TDM (S1, S2), k étant un nombre entier compris entre 1 et K.

10. Commutateur crossbar (100, 100') selon la revendication 9, dans lequel chacun desdits K commutateurs TDM (S1, S2) est configuré pour recevoir M sous-flux d'entrée TDM, c'est-à-dire un sous-flux d'entrée TDM à partir de chacun desdits M éminceurs (SL1, SL2, SL3, SL4), pour exécuter une fonction d'interconnectivité non bloquante entre lesdits M sous-flux d'entrée TDM et M sous-flux de sortie TDM, et pour transférer chacun desdits M sous-flux de sortie TDM vers un desdits M déséminceurs (DL1, DL2, DL3, DL4).

11. Commutateur crossbar (100, 100') selon la revendication 10, dans lequel lesdits commutateurs TDM (S1, S2) sont configurés de la même manière, c'est-à-dire qu'ils sont configurés pour commuter le contenu de K sous-affluents d'entrée provenant d'un même éminceur durant un certain intervalle temporel en K sous-affluents de sortie transmis à un même déséminceur durant un même intervalle temporel.

12. Commutateur crossbar (100, 100') selon la revendication 10 ou 11, dans lequel chaque déséminceur parmi lesdits M déséminceurs (DL1, DL2, DL3, DL4) est configuré pour recevoir K sous-flux de sortie TDM, c'est-à-dire pour recevoir le k^{ème} sous-flux de sortie TDM à partir du k^{ème} commutateur TDM (S1, S2), k étant un nombre entier compris entre 1 et K, et pour fusionner lesdits K sous-flux de sortie TDM par affluent, fournissant ainsi un flux de sortie TDM (So1, So2, So3, So4) à sa sortie.

13. Commutateur crossbar (100, 100') selon la revendication 12, comprenant en outre, pour chaque déséminceur parmi lesdits M déséminceurs (DL1, DL2, DL3, DL4), au moins un dispositif de démappage configuré pour démapper un signal client respectif à partir d'au moins un affluent de sortie du flux de sortie TDM (So1, So2, So3, So4) fourni à la sortie dudit déséminceur (DL1, DL2, DL3, DL4).

14. Commutateur crossbar (100, 100') selon l'une quelconque des revendications précédentes, comprenant en outre au moins un commutateur de protection TDM (S3), ledit éminceur (SL1) comprenant un pont de protection (br1) configuré pour connecter ledit éminceur (SL1) à un desdits K commutateurs TDM (S1, S2) et audit au moins un commutateur de protection TDM (S3), et ledit déséminceur (DL4) comprend un sélecteur de protection (sel4) configuré pour connecter sélectivement ledit déséminceur (DL4) audit au moins un commutateur de protection TDM (S1, S2) ou audit au moins un commutateur de protection TDM (S3).

15. Réseau de communication comprenant un commutateur crossbar (100, 100') selon l'une quelconque des revendications précédentes.
